# EUROPEAN PATENT APPLICATION

(11) **EP 3 543 827 A1**
(43) Date of publication of application: **25.09.2019**
(21) Application number: 16921945.8
(22) Date of filing: 21.11.2016
(51) Int. Cl.: G06F 1/26

(54) **ELECTRONIC DEVICE, CHARGER, CHARGING SYSTEM AND CHARGING METHOD**

(71) Applicant: Shenzhen Royole Technologies Co., Ltd., Shenzhen, Guangdong 518052 (CN)
(72) Inventor: CHEN, Zengyuan, Shenzhen Guangdong 518052 (CN); YANG, Bihua, Shenzhen Guangdong 518052 (CN)
(74) Representative: Hamer, Christopher K.
(86) International application number: PCT/CN2016/106600
(87) International publication number: WO 2018/090371

(57) **Abstract**

A charging method is operated to control a charger (200) to charge an electronic device (100). The charging method includes the electronic device (100) performing a handshake communication with the charger (200) when the electronic device (100) is connected to the charger (200) through a charge cable (300); controlling a power pin (Vbus) of a power interface (11) of the electronic device (100) to electrically connect to a first data pin (D+) of the power interface (11) and controlling a ground pin (GND) of the power interface (11) to connect to a second data pin (D-) of the power interface (11) after the handshake communication is successfully performed; controlling a power pin (Vbus) of a charge interface (22) of the charger (200) to electrically connect to a first data pin (D-) of the charge interface (22) and controlling a ground pin (GND) of the charge interface (22) to connect to a second data (D+) pin of the charge interface (22). The electronic device (100), the charger (200), a charge system, and a charging method may perform a quick charging through an ordinary charge cable (300) according to needs.

## Description

### TECHNICAL FIELD

The present disclosure relates to an electronic device, and more particularly relates to an electronic device with a charging function and a charger, a charging system, and a charging method for the electronic device.

### BACKGROUND

At present, electronic devices, such as mobile phones and tablet computers, have become more and more popular and have greatly facilitated people's lives. People may often face situations that the mobile phones are out of power when urgently needing to be used. Thus, the quick charging technology has emerged. In some existing quick charging technologies, charging a certain amount of electricity in a short time is achieved by increasing the charge voltage or charge current. Although the charging efficiency is improved, heat generating of the electronic devices or heat generating of the data lines become more serious. In addition, in some quick charging technologies, the existing standard USB charge cables may be modified to particular data cables. The particular charge cables are required to perform the quick charging, which leads that the quick charging may not be performed when the user only has the ordinary USB charge cable.

### SUMMARY

Embodiments of the present disclosure provide an electronic device, a charger, a charging system, and a charging method, capable of using ordinary charge cables to perform a quick charging and solving the problem of the heat generating of the charging cable.

An embodiment of the present disclosure provides an electronic device. The electronic device includes a power interface and a processor. The power interface includes a power pin, a first data pin, a second data pin, and a ground pin. The power interface is connected to a charger through a charging cable. The electronic device further includes a connection switching circuit. The connection switching circuit is connected to the power pin, the first data pin, the second data pin, and the ground pin of the power interface and the processor. The processor is operated to perform a handshake communication with the charger through the charge cable after the power interface of the electronic device is connected to a power interface of the charger through the charge cable. The processor is further operated to control the connection switching circuit to connect the first data pin of the power interface to the power pin and connect the second data pin of the power interface to the ground pin after the handshake communication is successfully performed.

An embodiment of the present disclosure provides a charger. The charger includes a charge interface and a controller. The charge interface includes a power pin, a first data pin, a second data pin, and a ground pin. The controller includes a connection switching circuit. The connection switching circuit is connected to the first data pin, the second data pin, and the ground pin of the charge interface and the controller. The controller is operated to control the connection switching circuit to connect the first data pin of the charge interface to the power pin and connect the second data pin of the charge interface to the ground pin after a handshake communication between the charger and an electronic device is successfully performed.

An embodiment of the present disclosure provides a charging system. The charging system includes an electronic device and a processor. The charger includes a controller and a charge interface. The electronic device includes a processor and a power interface. The power interface includes a first power pin, a first data pin, a second data pin, and a first ground pin. The charge interface includes a second power pin, a third data pin, a fourth data pin, and a second ground pin. The electronic device further includes a first connection switching circuit. The first connection switching circuit is connected to the first power pin, the first data pin, the second data pin, and the first ground pin of the power interface, and the processor. The charger further includes a second connection switching circuit. The second connection switching circuit is connected to the second power pin, the third data pin, the fourth data pin, and the second ground pin of the charge interface, and the controller. The processor is operated to perform a handshake communication with the charger through a charge cable after the power interface of the electronic device is connected to the charge interface of the charger through the charge cable. The processor is further operated to control the first connection switching circuit to connect the first data pin of the power interface to the first power pin of the power interface and connect the second data pin of the power interface to the first ground pin of the power interface after the handshake communication is successfully performed. The controller is operated to control the second connection switching circuit to connect the third data pin of the charge interface to the second power pin of the charge interface and connect the fourth data pin of the charge interface to the second ground pin of the charge interface after the handshake communication is successfully performed.

An embodiment of the present disclosure provides a charging method. The charging method is operated to control a charger to charge an electronic device. The charger includes a charge interface. The electronic device includes a power interface. The power interface includes a first power pin, a first data pin, a second data pin, and a first ground pin. The charge interface includes a second power pin, a third data pin, a fourth data pin, and a second ground pin. The charging method includes: performing a handshake communication with the charger through a charge cable when the electronic device is connected to the charger through the charge cable; after the handshake communication is successfully performed, controlling the first data pin to be connected to the first power pin of the power interface, controlling the second data pin to be connected to the first ground pin of the power interface, controlling the third data pin to be connected to the second power pin of the charge interface, and controlling the fourth data pin to be connected to the second ground pin of the charge interface.

The electronic device, charger, charging system, and charging method in the present disclosure may the use the ordinary charge cable to perform the quick charging and avoiding heat generating of the charging cable line.

### BRIEF DESCRIPTION OF THE DRAWINGS

To better illustrate the technical solutions of embodiments of the present disclosure, the following descriptions will briefly illustrate the accompanying drawings described in the embodiments. Obviously, the following described accompanying drawings are merely some embodiments of the present disclosure. Those skilled in the art can obtain other accompanying drawings according to the described accompanying drawings without creative efforts.
FIG. 1 is a block diagram of a charging system according to an embodiment of the present disclosure.
FIG. 2 is a circuit diagram of a charging system according to an embodiment of the present disclosure.
FIG. 3 is a circuit diagram of a current detection and control circuit of a charging system according to an embodiment of the present disclosure.
FIG. 4 is a flow chart of a charging method according to an embodiment of the present disclosure.
FIG. 5 is a sub-flow chart of the process at block S401 of the charging method of FIG. 4.
FIG. 6 is a supplementary flow chart of the charging method according to an embodiment of the present disclosure.

### DETAILED DESCRIPTION OF ILLUSTRATED EMBODIMENTS

The technical solutions of embodiments of the present disclosure will be described clearly and completely in combination with the accompanying drawings of the embodiments of the present disclosure. Obviously, the described embodiments are merely a part of embodiments of the present disclosure, but not all of the embodiments. All other embodiments obtained by those skilled in the art without creative efforts based on the embodiments of the present disclosure shall fall within the protection scope of the present disclosure.

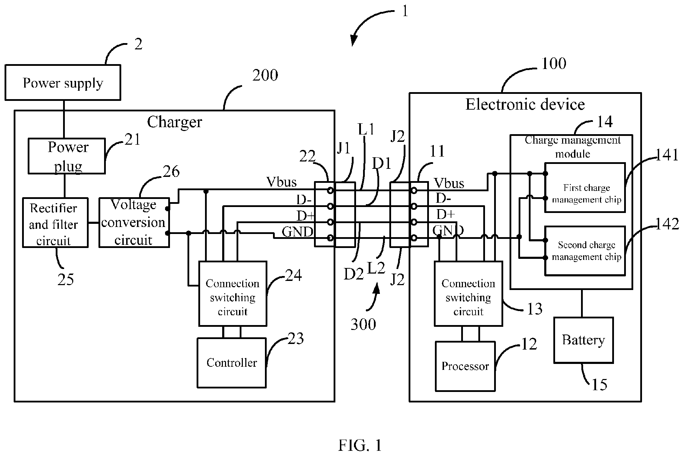

FIG. 1 illustrates a block diagram of a charging system according to an embodiment of the present disclosure. The charging system includes an electronic device 100, a charger 200, and a charge cable 300. The charger 200 is operated to charge the electronic device 100 through the charge cable 300.

As illustrated in FIG. 1, the electronic device 100 includes a power interface 11, a processor 12, a connection switching circuit 13, a charge management module 14, and a battery 15. The charger 200 includes a power plug 21, a charge interface 22, a controller 23, and a connection switching circuit 24.

The power plug 21 is operated to be connected to a power supply 2. The power interface 11 of the electronic device 100 is connected to the charge interface 22 of the charger 200 through the charge cable 300.

As illustrated in FIG. 1, the power interface 11 of the electronic device 100 and the charge interface 22 of the charger 200 are universal serial bus (USB) interfaces. The power interface 11 of the electronic device 100 and the charge interface 22 of the charger 200 both include a power pin Vbus, a data pin D-, a data pin D+, and a ground pin GND. The charge cable 300 includes a power line L1, a ground line L2, and a pair of data lines D1, D2. When the power interface 11 of the electronic device 100 is connected to the charge interface 22 of the charger 200 through the charge cable 300, the power line L1 is connected to the power pin Vbus of the power interface 11 and the power pin Vbus of the charge interface 22, the ground line L2 is connected to the ground pin GND of the power interface 11 and the ground pin GND of the charge interface 22, the data line D1 is connected to the data pin D- of the power interface 11 and the data pin D- of the charge interface 22, and the data line D2 is connected to the data pin D+ of the power interface 11 and the data pin D+ of the charge interface 22.

The connection switching circuit 13 of the electronic device 100 is connected between the processor 12 and the power pin Vbus, the data pins D-, D+, the ground pin GND of the power interface 11. The connection switching pin 13 establishes a connection between the processor 12 and the data pins D-, D+ of the power interface 11 by default.

The connection switching circuit 24 of the charger 200 is connected between the controller 23 and the power pin Vbus, the data pins D-, D+, the ground pin GND of the charge interface 22. The connection switching pin 24 establishes a connection between the controller 23 and the data pins D-, D+ of the charge interface 22 by default.

After the power interface 11 of the electronic device 100 is connected to the charge interface 22 of the charger 200, the processor 12 performs a handshake communication with the controller 23 of the charger 200 through the charge cable 300. After the handshake communication between the processor 12 and the controller 23 is successfully performed, the processor 12 of the electronic device 100 controls the connection switching circuit 13 to respectively connect the data pins D-, D+ of the power interface 11 to the power pin Vbus and the ground pin GND of the power interface 11. That is, the processor 12 controls the connection switching circuit 13 to connect the data pin D- of the power interface 11 to the power pin Vbus of the power interface 11 and to connect the data pin D+ of the power interface 11 to the ground pin GND of the power interface 11. It can be understood, in other embodiments, the processor 12 may control the connection switching circuit 13 to connect the data pin D- of the power interface 11 to the ground pin GND of the power interface 11 and to connect the data pin D+ of the power interface 11 to the power pin Vbus of the power interface 11. As long as one of the data pins D-, D+ is connected to the power pin Vbus and the other one of the data pins D-, D+ is connected to the ground pin GND.

After the handshake communication is successfully performed, the controller 23 of the charger 200 controls the connection switching circuit 24 to respectively connect the data pins D-, D+ of the charge interface 22 to the power pin Vbus and the ground pin GND of the charge interface 22. That is, the controller 23 controls the connection switching circuit 24 to connect the data pin D- of the charge interface 22 to the power pin Vbus of the charge interface 22 and to connect the data pin D+ of the charge interface 22 to the ground pin GND of the charge interface 22. It can be understood, in other embodiments, the controller 23 may control the connection switching circuit 24 to connect the data pin D- of the charge interface 22 to the ground pin GND of the charge interface 22 and to connect the data pin D+ of the charge interface 22 to the power pin Vbus of the charge interface 22. As long as under the condition of keeping the same connection relationships as the power interface 11, one of the data pins D-, D+ is ensured to connected to the power pin Vbus and the other one of the data pins D-, D+ is connected to the ground pin GND.

Therefore, the data line D1 and the power line L1 of the charge cable 300 are short circuited, and the data line D2 and the ground line L2 of the charge cable 300 are also short circuited. Thus, comparing with only the power line L1 and ground line L2 for the charge current passing therethrough for charging, the charge cable 300 of the present disclosure has one more line for the charge current passing therethrough. That is, the data line D1 and the power line L1 cooperatively function as the original power line L1, the data line D2 and the ground line L2 cooperatively function as the original ground line L2. Since the resistance of the charge cable 300 is reduced by half, the charge current may be doubled at the same charge voltage, which greatly enhances the charging speed without using particular charge cables.

In addition, since there is one more line for charging, the heat generated by the charge cable 300 will be greatly reduced while the charging speed is enhanced.

The charge cable 300 includes a pair of power connectors J1, J2. The charge cable 300 is connected to the charge interface 22 of the charger 200 through the power connector J1. The charge cable 300 is connected to the power interface 11 of the electronic device 100 through the power connector J2. The charge cable 300 may be a USB charge cable, the power connector J1 may be a USB connector and the charge interface 22 of the charger 200 may be a USB interface, the power connector J2 may be a mini-USB connector, and the power interface 22 of the electronic device 100 may be a mini-USB interface.

The charge management module 14 is electronically connected to the power interface 11 and operated to receive a power provided by the charger 200 from the power interface 11 and convert the power to a suitable charge voltage or a suitable charge current to power the battery 15.

As illustrated in FIG. 1, the charge management module 14 includes a first charge management chip 141 and a second charge management chip 142. The first charge management chip 141 is electronically connected to the power pin Vbus and the ground pin GND of the power interface 11. The second charge management chip 142 is also electronically connected to the power pin Vbus and the ground pin GND of the power interface 11. A current received by the power pin Vbus and the ground pin GND of the power interface 11 are shunted to be transmitted to the first charge management chip 141 and the second charge management chip 142. Thus, the current received by the power pin Vbus and the ground pin GND of the power interface 11 are shunted by the first charge management chip 141 and the second charge management chip 142. The current passing through a single charge management chip is half of the current received by the power pin Vbus and the ground pin GND of the power interface 11. Therefore, under a condition that the resistance of the charge cable for the charge current passing therethrough is reduced by half and the charge current is doubled, the current is shunted by the first charge management chip 141 and the second charge management chip 142 such that the current in the first charge management chip 141 and the second charge management chip 142 is still the normal charge current, which efficiently prevents the heat generating of the charge management chips.

The first charge management chip 141 and the second charge management chip 142 are simultaneously connected to the battery 15. Currents output from the first charge management chip 141 and the second charge management chip 142 are combined to form a sum current as the charge current for finally charging the battery 15, which ensures the charge current of the present disclosure is about two times of the ordinary charge current and achieves a quick charging effect.

As illustrated in FIG. 1, the charger 200 further includes a rectifier and filter circuit 25 and a voltage conversion circuit 26. The rectifier and filter circuit 25 is electronically connected between the power plug 21 and the voltage conversion circuit 26. The voltage conversion circuit 26 is also electronically connected to the charge interface 22. The rectifier and filter circuit 25 is operated to rectify and filter an alternative current received by the power plug 21. The voltage conversion circuit 26 is operated to convert the rectified and filtered current or voltage to a suitable charge voltage or a suitable charge current.

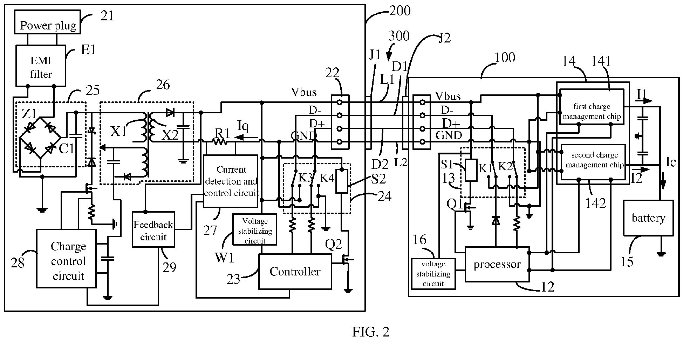

FIG. 2 illustrates a circuit diagram of a charging system according to an embodiment of the present disclosure. The connection switching circuit 13 of the electronic device 100 is a double-pole double-throw (DPDT) relay which includes a switch K1, a switch K2, and an enable terminal S1. A common terminal of the switch K1 is electronically connected to the data pin D- of the power interface 11, a normally closed terminal of the switch K1 is electronically connected to the processor 12, a normally open terminal of the switch K1 is electronically connected to the power pin Vbus of the power interface 11. A common terminal of the switch K2 is electronically connected to the data pin D+ of the power interface 11, a normally closed terminal of the second switch K2 is electronically connected to the processor 12, a normally open terminal of the switch K2 is electronically connected to the ground pin GND of the power interface 11.

In an original state, the common terminal of the switch K1 is connected the normally closed terminal of the switch K1 and the common terminal of the switch K2 is connected the normally closed terminal of the switch K2 such that the data pins D-, D+ of the power interface 11 are both connected to the processor 12.

The enable terminal S1 is connected between the power pin Vbus of the power interface 11 and a ground switch Q1. The processor 12 is also electronically connected to the ground switch Q1.

The connection switching circuit 24 of the charger 100 is also a double-pole double-throw (DPDT) relay which includes a switch K3, a switch K4, and an enable terminal S2. A common terminal of the switch K3 is electronically connected to the data pin D- of the charge interface 22, a normally closed terminal of the switch K3 is electronically connected to the controller 23, and a normally open terminal of the switch K3 is electronically connected to the power pin Vbus of the charge interface 22. A common terminal of the switch K4 is electronically connected to the data pin D+ of the charge interface 22, a normally closed terminal of the switch K4 is electronically connected to the controller 23, and a normally open terminal of the switch K4 is electronically connected to the ground pin GND of the charge interface 22.

In an original state, the common terminal of the switch K3 is connected the normally closed terminal of the switch K3 and the common terminal of the switch K4 is connected the normally closed terminal of the second switch K4 such that the data pins D-, D+ of the charge interface 22 both are connected to the controller 23.

The enable terminal S2 of the connection switching circuit 24 is connected between the power pin Vbus of the charge interface 22 and a ground switch Q2. The controller 23 is also electronically connected to the ground switch Q2.

After the electronic device 100 is connected to the charger 200 through the charge cable 300, the processor 12 of the electronic device 100 establishes a connection with the data pins D-, D+ of the charge interface 22 through the data pins D-, D+ of the power interface 11 and the data lines D1, D2 of the charge cable 300. The processor 12 of the electronic device 100 further establishes a connection with the controller 23 of the charger 200. Thus, the processor 12 of the electronic device 100 may perform a handshake communication with the controller 23 of the charger 200 through the data lines D1, D2 of the charge cable 300.

When the handshake communication between the processor 12 of the electronic device 100 and a controller 23 of the charger 200 is successfully performed, the processor 12 controls to output a turn-on signal to the ground switch Q1 to control the ground switch Q1 to be turned on. Thus, a branch where the enable terminal S1 is located is turned on and a current passing through the enable terminal S1. Thereby, the common terminal of the switch K1 is triggered to be connected to the normally open terminal of the switch K1 and the common terminal of the switch K2 is triggered to be connected to the normally open terminal of the switch K2. As a result, the data pin D- of the power interface 11 connected to the common terminal of the switch K1 is connected to the power pin Vbus connected to the normally open terminal of the switch K1. At the same time, the data pin D+ of the power interface 11 connected to the common terminal of the switch K2 is triggered to be connected to the ground pin GND connected to the normally open terminal of the switch K2.

At this time, the data pin D- of the power interface 11 of the electronic device 100 is connected to the power pin Vbus of the power interface 11 and the data pin D+ of the power interface 11 of the electronic device 100 is connected to the ground pin GND of the power interface 11.

When the handshake communication is successfully performed, the controller 23 controls to output a turn-on signal to the ground switch Q2 to control the ground switch Q2 to be turned on. Thus, a branch where the enable terminal S2 is located is turned on and a current passing through the enable terminal S2. Thereby, the common terminal of the switch K3 is triggered to be connected to the normally open terminal of the switch K3 and the common terminal of the switch K4 is triggered to be connected to the normally open terminal of the switch K4. As a result, the data pin D- of the charge interface 22 connected to the common terminal of the switch K3 is connected to the power pin Vbus connected to the normally open terminal of the switch K3. At the same time, the data pin D+ of the charge interface 22 connected to the common terminal of the switch K4 is triggered to be connected to the ground pin GND connected to the normally open terminal of the switch K4.

At this time, the data pin D- of the charge interface 22 of the charger 200 is connected to the power pin Vbus of the charge interface 22 and the data pin D+ of the charge interface 22 of the charger 200 is connected to the ground pin GND of the power charge interface 22.

Therefore, the data line D1 and the power line L1 of the charge cable 300 are short circuited, and the data line D2 and the ground line L2 of the charge cable 300 are also short circuited.

It is equivalent to that the charge cable 300 has one more line for the charge current passing therethrough and the resistance is reduced by half. Thereby, the charge current is nearly doubled and the charging speed is enhanced while the charger 200 maintains the original charge voltage.

Therein, the handshake communication between the processor 12 of the electronic device 100 and the controller 23 of the charger 200 includes: the processor 12 sending a first preset pulse signal to the controller 23 of the charger 200 through the charge cable 300; and the controller 23 of the charger 200 sending a second preset pulse signal to the processor 12 of the electronic device 100 to inform the processor 12 that the first preset pulse signal is successfully received through the charge cable 300 after the controller 23 receives the first preset pulse signal.

Therein, after receiving the second preset pulse signal, the processor 12 of the electronic device 100 confirms the handshake communication is successfully performed and the processor 12 performs the above described controlling of the common terminals of the switches K1, K2 of the connection switching circuit 13 being respectively connected to the normally open terminals thereof. After receiving the first preset pulse signal, the controller 23 of the charger 200 confirms the handshake communication is successfully performed and the controller 23 performs the above described controlling of the common terminals of the switches K3, K4 of the connection switching circuit 24 being respectively connected to the normally open terminals thereof. That is, when receiving the first preset pulse signal, the controller 23 controls the connection switching circuit 24 to switch the common terminals of the switches K3, K4 to be connected to the normally open terminals thereof; the controller 23 sends the second preset pulse signal to the processor 12 of the electronic device 100 after the common terminals of the switches K3, K4 are respectively connected to the normally open terminals thereof. Thereby, the quick charging preparation on hardware circuit is completed.

Therein, in one embodiment, after receiving the second preset pulse signal, the processor 12 of the electronic device 100 sends a third preset pulse signal to the controller 23 of the charger 200 to request the charger 200 to start charging. That is, the third preset pulse signal is transmitted to the controller 23 of the charger 200 to request the charger 200 to provide a charging power to start charging after the quick charging preparation on hardware circuit is completed.

It is clear that, in the other embodiments, the controller 23 may first send the first preset pulse signal to the processor 12 of the electronic device 100 to start the handshake communication.

In some embodiments, the first preset pulse signal and the second preset pulse signal each may be 10 continuous pulses. A cycle of each pulse is 20 milliseconds and a duty ratio of each pulse is 50%. The third preset pulse signal is 5 continuous pulses. A cycle of each pulse is 20 milliseconds and a duty ratio of each pulse is 50%.

It is clear that, the first preset pulse signal, the second preset pulse signal, and the third preset pulse signal may be other same or different pulse signals.

As illustrated in FIG. 2, the charger 200 further includes a resistor R1 located in a branch of the ground pin GND of the charge interface 22. That is, the resistor R1 is connected between the voltage conversion circuit 26 and the ground pin of the charge interface 22. The charge interface 22 further includes a current detection and control circuit 27 which is connected to two ends of the resistor R1. The current detection and control circuit 27 is operated to detect a charge current Iq at the charger 200 which is output from the charger 200 to the charge interface 22.

The controller 23 of the charger 200 is connected to the current detection and control circuit 27 and operated to receive the charge current Iq detected by the current detection and control circuit 27. In one embodiment, after confirming that the handshake communication is successfully performed, the controller 23 of the charger 200 further determines whether the charge current Iq is greater than a first preset current. When the charge current Iq is greater than the first preset current, the controller 23 controls the common terminals of the switch K3, K4 to be respectively connected to the normally open terminals thereof such that the data pin D- of the charge interface 22 is connected to the power pin Vbus of the charge interface 22 and the data pin D+ of the charge interface 22 is connected to the ground pin GND of the charge interface 22. When the charge current Iq is not greater than the first preset current, the controller 23 maintains the connection between the common terminals of the switch K3, K4 and the normal closed terminals thereof.

In one embodiment, the first preset current is 1 ampere (A). When the charge current is less than or equal to the first preset current, it indicates the battery 15 is nearly fully charged and the battery 15 is not suitable for quick charging. Therefore, the controller 23 maintains the connection between the common terminals of the switch K3, K4 and the normally closed terminals, without increasing the charging lines of the charge cable 300.

In one embodiment, after controlling the common terminals of the switch K3, K4 to be respectively connected to the normally open terminals thereof, the controller 23 of the charger 200 periodically determines whether the charge current is greater than a first preset current. When the charge current is less than or equal to the first preset current, the controller 22 controls the common terminals of the switch K3, K4 to be connected to the normally closed terminals. Thus, the data pin D- of the charge interface 22 is disconnected from the power pin Vbus of the charge interface 22 and the data pin D+ of the charge interface 22 is disconnected from the ground pin GND of the charge interface 22. Thus, the number of the charging lines of the charge cable 300 is not increased. Therein, after the processor 12 of the electronic device 100 controls the connection switching circuit 13 to switch the data pin D- of the charge interface 22 to be connected to the power pin Vbus of the charge interface 22 and the data pin D+ of the charge interface 22 to be connected to the ground pin GND of the charge interface 22, the processor 12 of the electronic device 100 further acquires a state of the battery 15 through the charge management module 14. The state of the battery 15 includes a temperature state. The first charge management chip 141 and the second charge management chip 142 of the charge management module 14 may acquire the temperature state of the battery 15 in real time and saves the temperature state information of the battery 15. The processor 12 reads the temperature state information of the battery 15 saved by the charge management chip 14 and acquires the state of the battery 15.

The processor 12 determines whether the battery 15 is too cold or too hot according to the state of the battery 15 acquired. If the battery 15 is not too cold or not too hot, the processor 12 further acquires a current I1 output from the first charge management chip 141 and a current I2 output from the second charge management chip 142, calculates a sum current Ic of the current I1 and the current 12, and determines whether the sum current Ic is less than a second preset current. When the sum current Ic is less than the second preset current, the processor 12 controls to stop charging the battery 15. In one embodiment, the first preset current is 0.5A. When the battery 15 is not too cold or not too hot and the sum current Ic is less than 0.5A, it indicates the charger 200 is fully charged at this time, then the charging is stopped.

When the battery 15 is too cold or too hot, the processor 12 controls the connection switching circuit 24 to switch the common terminals of the switch K3, K4 to be connected to the normally closed terminals thereof such that the data pin D- of the charge interface 22 is disconnected from the power pin Vbus of the charge interface 22 and the data pin D+ of the charge interface 22 is disconnected from the ground pin GND of the charge interface 22. Thus, the data pins D-, D+ of the charge interface 22 resume the connection with the processor 12. At this time, the charge cable 300 is resumed to be the ordinary USB charging line.

When the battery 15 is too cold or too hot, the quick charging is not suitable at this time. Therefore, the charge cable 300 is resumed to be the ordinary charging line and the charge current may be reduced under the same charge voltage. As a result, a damage to the battery 15 or a dangerous battery accident caused by an excessive charge current may be prevented.

The processor 12 is further operated to read the current I1 output from the first charge management chip 141 and determines whether the current I1 output from the first charge management chip 141 is less than a third preset current.

If the current I1 output from the first charge management chip 141 is less than the third preset current, the processor 12 acquires the state of the battery 15 again to determines whether the battery 15 is cold hot or too hot. If the battery 15 is too cold or too hot, the processor 12 controls the first charge management chip 141 and the second charge management chip 142 to suspend operating for a preset time (for example 2 minutes), and then controls the first charge management chip 141 and the second charge management chip 142 to resume to work and output currents to charge the battery 15.

If the battery 15 in not too cold or not too hot, the processor 12 controls the first charge management chip 141 and the second charge management chip 142 to stop operating and the charging is finished.

In one embodiment, the third preset current is 128mA (milliampere). When the current I1 output from the first charge management chip 141 is less than the third preset current and the battery 15 is not too cold or not too hot, it indicates the battery 15 is fully charged and the charging is finished. When the current I1 output from the first charge management chip 141 is less than the third preset current and the battery 15 is too cold or too hot, the charging is suspended for a while to avoid a damage to the battery 15.

When the current I1 output from the first charge management chip 141 is greater than or equal to the third preset current, the processor 12 further acquires the current I2 output from the second charge management chip 142 and calculates a sum current Ic of the current I1 output from the first charge management chip 141 and the current I2 output from the second charge management chip 142. Then, the processor 12 determines whether the sum current Ic is greater than a fourth preset current. If the sum current Ic is greater than the fourth preset current, the processor 12 performs the handshake communication with the controller 23 of the charge interface 200 through the charge cable 300. After the handshake communication is successfully performed, the processor 12 controls the connection switching circuit 13 of the electronic device 100 to respectively switch the data pins D-, D+ of the power interface 11 to be connected to the power pin Vbus and ground pin GND of the power interface 11.

Accordingly, as described above, after the handshake communication is successfully performed, the controller 23 of the charger 200 controls the connection switching circuit 24 to switch the data pins D-, D+ of the charge interface 22 to be connected to the power pin Vbus and ground pin GND of the charge interface 22. Therefore, the charge cable 300 is switched to the quick charging state again.

Therefore, in the present disclosure, after the power line L1 of the charge cable 300 is connected to the data line D1 and the ground line L2 of the charge cable 300 is connected to the data line D2, the charger 200 determines whether the battery 15 is nearly full charged according to the charge current Iq to control the charge cable 300 maintains the quick charging state or exits the quick charging state. Furthermore, by detecting the current output from the charge management module 14, the electronic device 100 determines whether the battery 15 is fully charged or whether the battery 15 is too cold or too hot so as to control the charge cable 300 to maintain the quick charging state or exit from the quick charging state, or control the charge management module 14 to stop charging the battery 15. Thus, the charging processing of the battery 15 is efficiently managed.

Therein, the controller 23 of the charge 200 is further operated to control the current and detection circuit 27 to limit the charge current Iq output from the charger 200 to a first threshold value after the charger 200 is connected to the power supply 2.

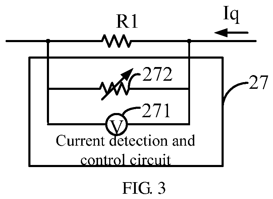

FIG.3 is a circuit diagram of the current detection and control circuit 27. In one embodiment, the current detection and control circuit 27 includes a voltmeter 271 and a digital variable resistor 272. The voltmeter 271, the digital variable resistor 272, and the resistor R1 are connected in parallel. The controller 23 reads a voltage Vg of two ends of the resistor R1 from the voltmeter 271 and calculates the charge current Iq (namely Iq=Vq/Rq) according to an equivalent resistance Rq of the digital variable resistor 272 and the resistor R1. The controller 23 is further operated to control an adjustment of the resistance of the digital variable resistor 272 so that the equivalent resistance Rq of the digital variable resistor 272 and the resistor R1 is adjusted to satisfy that the charge current Iq is less than or equal to the first threshold value. In one embodiment, the first threshold value is 2A.

After the electronic device 100 is initiated, the processor 12 of the electronic device 100 is operated to set the maximum charge current of the first charge management chip 141 and the second charge management chip 142 to be a second threshold value, to set the cut-off current of the first charge management chip 141 to be a third threshold value, and to set the cut-off current of the second charge management chip 142 to be a fourth threshold value. In one embodiment, the second threshold value is 1.2A, the third threshold value is 128mA, and the fourth threshold value is 512mA. That is, in some embodiments, the first threshold value is greater than the second threshold value, the second threshold value is greater than the fourth threshold value, and the fourth threshold value is greater than the third threshold value.

Please referring back to FIG. 2, the rectifier and filter circuit 25 includes a rectifying bridge Z1 and a capacitor C1. The voltage conversion circuit 26 is a transformer circuit and includes a primary coil X1 and a secondary coil X2. Voltage converting is achieved by setting different numbers of the turns of the primary coil X1 and the secondary coil X2.

As illustrated in FIG. 2, the charger 200 further includes a charge control chip 28 and a feedback circuit 29. The feedback circuit 29 is connected to the power pin Vbus of the charge interface 22, the current detection and control circuit 27, and the charge control chip 28. The feedback circuit 29 is operated to feed back the information including the charge current Iq to the charge control chip 28. The charge control chip 28 is operated to perform a conventional control of charge according to the information fed back by the feedback circuit 29, such as adjusting the charge voltage and the like.

The charger 200 further includes a voltage stabilizing circuit W1. The voltage stabilizing circuit W1 is connected between the power pin Vbus of the charge interface 22 and the controller 23 to provide a stable operating voltage to the controller 23.

The charger 200 further includes an electromagnetic interference (EMI) filter E1. The EMI filter E1 is connected between the power plug 21 and the rectifier and filter circuit 25. The EMI filter E1 is operated to filter out the electromagnetic interference of the alternating current received by the power plug 21.

As illustrated in FIG.2, the electronic device 100 further includes a voltage stabilizing circuit 16. The voltage stabilizing circuit 16 is connected between the power pin Vbus of the power interface 11 and the processor 12. The voltage stabilizing circuit 16 is operated to provide a stable operating voltage for the processor 12.

Therein, the ground switch Q1 is a MOS transistor connected between the enable terminal S1 of the connection switching circuit 13 and the ground. The ground switch Q2 is a MOS transistor connected between the enable terminal S2 of the connection switching circuit 24 and the ground. A source of the ground switch Q1 is grounded, a drain of the ground switch Q1 is connected to the enable terminal S1, and a gate of the ground switch Q1 is connected to the processor 12. The ground switch Q1 is operated to receive a turn-on signal of the processor 12 to be in an on state. A source of the ground switch Q2 is grounded, a drain of the ground switch Q2 is connected to the enable terminal S2, and a gate of the ground switch Q2 is connected to the controller 23. The ground switch Q2 is operated to receive a turn-on signal of the controller 23 to be in an on state. Such as, the ground switches Q1, Q2 both are NMOS transistors. The turn-on signals both are high level signals. When the gates of the ground switches Q1, Q2 both receive high level signals, the ground switches Q1, Q2 both are turned on.

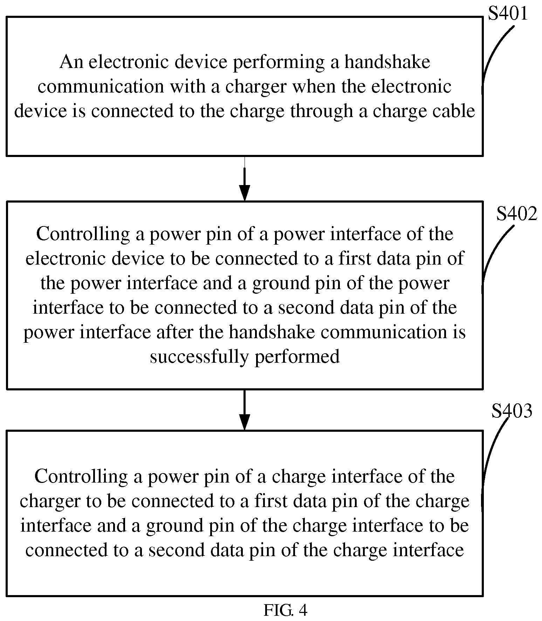

FIG. 4 is a flow chart of an embodiment of a charging method according to the present disclosure. The charging method is operated to control the above described charger 200 to charge the electronic device 100. The charging method includes the following processes.

At block S401, the electronic device 100 performs a handshake communication with the charger 200 when the electronic device 100 is connected to the charger 200 through the charge cable 300.

At block S402, after the handshake communication is successfully performed, the electronic device 100 controls the power pin Vbus thereof to be connected to the data pin D-thereof and the ground pin GND thereof to be connected to the data pin D+ thereof. In detail, the electronic device 100 includes the connection switching circuit 13. The connection switching circuit 13 includes switches K1, K2 and the enable terminal S1. In an original state, the common terminal of the switch K1 is electronically connected to the data pin D- of the power interface 11, the normally closed terminal of the switch K1 is electronically connected to the processor 12, and the normally open terminal of the switch K1 is electronically connected to the power pin Vbus of the power interface 11; the common terminal of the switch K2 is electronically connected to the data pin D+ of the power interface 11, the normally closed terminal of the second switch K2 is electronically connected to the processor 12, the normally open terminal of the switch K2 is electronically connected to the ground pin GND of the power interface 11. The electronic device 100 establishes the connection between the power pin Vbus of the power interface 11 and the data pin D- of the power interface 11 and the connection between the ground pin GND of the power interface 11 and the data pin D- of the power interface 11 by controlling the common terminal of the switch K1 to be electronically connected to the normally open terminal of the switch K1 and controlling the common terminal of the switch K2 to be electronically connected to the normally open terminal of the switch K2.

At block S403, after the handshake communication is successfully performed, the charger 200 controls the power pin Vbus to be connected to the data pin D- and the ground pin GND to be connected to the data pin D+. In detail, the charger 200 includes the connection switching circuit 24. The connection switching circuit 24 includes switches K3, K4 and the enable terminal S2. In the original state, the common terminal of the switch K3 is electronically connected to the data pin D- of the charge interface 22, the normally closed terminal of the switch K3 is electronically connected to the charge interface 22, the normally open terminal of the switch K3 is electronically connected to the power pin Vbus of the charge interface 22; the common terminal of the switch K4 is electronically connected to the data pin D+ of the charge interface 22, the normally closed terminal of the second switch K4 is electronically connected to the charge interface 22, and the normally open terminal of the switch K4 is electronically connected to the ground pin GND of the charge interface 22. The charger 200 establishes the connection between the power pin Vbus of the charge interface 22 and the data pin D- of the charge interface 22, and the connection between the ground pin GND of the charge interface 22 and the data pin D- of the charge interface 22 by controlling the common terminal of the switch K3 to be electronically connected to the normally open terminal of the switch K3 and the common terminal of the switch K4 to be electronically connected to the normally open terminal of the switch K4.

In one embodiment, after confirming the handshake communication is successfully performed, the controller 23 of the charger 200 further determines whether the charge current Iq output from the charger 200 is greater than a first preset value. If the charge current Iq output from the charger 200 is greater than the first preset value, the controller 23 controls the power pin Vbus of the charge interface 22 to be electronically connected to the data pin D- and the power pin Vbus of the charge interface 22 to be electronically connected to the data pin D-. In one embodiment, the first preset current is 1A.

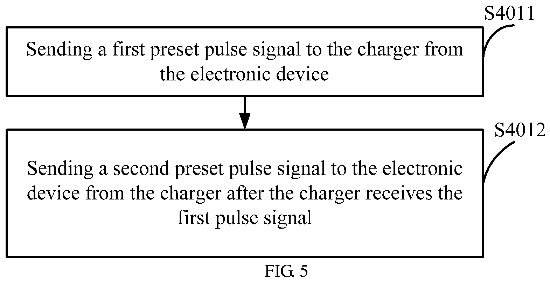

FIG. 5 illustrates a sub-flowchart of the process at block S401 in an embodiment of the present disclosure. The process at block S401 includes following sub-processes.

At block S4011, the electronic device 100 sends a first pulse signal to the charger 200. The first pulse signal is operated to send a quick charging request to the charger 200.

At block S4012, after receiving the first pulse signal, the charger 200 confirms the handshake communication is successfully performed. The charger 200 controls the connection switching circuit 24 to switch the common terminals of the switches K3, K4 to be connected to the normally open terminals. The charger 200 sends a second pulse signal to the electronic device 100 to inform the processor 12 that the first pulse signal is successfully received. Therein, the second pulse signal send to the processor 12 is operated to inform the electronic device 100 that the charger 200 is ready for quick charging.

Therein, after receiving the second pulse signal, the electronic device 100 confirms the handshake communication is successfully performed. The processor 12 controls the connection switching circuit 13 to switch the common terminals of the switches K1, K2 to be connected to the normally open terminals thereof.

In some embodiments, the charging method further includes following processes. After receiving the second pulse signal, the electronic device 100 sends a third preset pulse signal to the charger 200 to request the charger 200 to start supplying power to start charging.

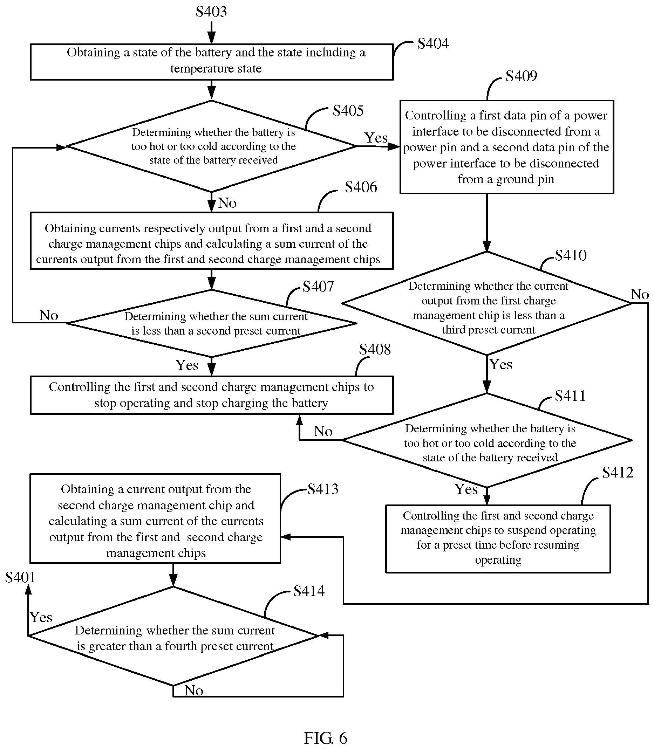

FIG.6 is a supplementary flowchart of a charging method according to an embodiment of the present disclosure. After the process at block S403, the charging method further includes processes: at block S404, a state of the battery 15 is acquired. Therein, the state of the battery 15 includes a temperature state. The electronic device 100 acquires the state of the battery 15 by reading the temperature information saved by the charge management module 14 of the electronic device 100.

In one embodiment, before the process at block S404, the charging method further includes determining whether the charge current is greater than the first present current. If yes, proceed to S406; if not, proceed to S409.

At block S405, the electronic device 100 determines whether the battery 15 is too cold or too hot according to the state of the battery 15. If not, proceed to S406, otherwise, proceed to S409.

At block S406, if the determination is that the battery 15 is not too cold or not too hot, the current I1 output from the first charge management chip 141 and the current I2 output from the second charge management chip 142 are further acquired and the sum current Ic of the current I1 output from the first charge management chip 141 and the current I2 output from the second charge management chip 142 is calculated.

At block S407, determines whether the sum current Ic is less than the second preset current. If yes, proceed to S408, otherwise, return to S405.

At block S408, if the sum current Ic is less than the second preset current, the first charge management chip 141 and the second charge management chip 142 are controlled to stop operating, that is, stop charging the battery 15. In one embodiment, the first preset current is 0.5A.

At block S409, if the battery 15 is too cold or too hot, the electronic device 100 controls the data pin D- of the power interface 11 to be disconnected from the power pin Vbus of the power interface 11 and the data pin D+ of the power interface 11 to be disconnected from the ground pin GND of the power interface 11. At this time, the charge cable 300 is resumed to be the ordinary charge cable to be used.

As illustrated in FIG. 6, when the charge cable 300 is the ordinary charge cable, that is, the data pin D- of the power interface 11 is disconnected from the power pin Vbus of the power interface 11 and the data pin D+ of the power interface 11 is disconnected from the ground pin GND of the power interface 11, the charging method further includes following processes.

At block S410, reads the current I1 output from the first charge management chip 141 and determines whether the current I1 output from the first charge management chip 141 is less than a third preset current. If yes, proceed to S411, otherwise, proceed to S413.

At block S411, if the current I1 output from the first charge management chip 141 is less than the third preset current, the processor 12 acquires the state of the battery 15 to determines whether the battery 15 is too cold or too hot. If yes, proceed to S412, otherwise, return to S408. At block S408, the first charge management chip 141 and the second charge management chip 142 are controlled to stop operating and stop charging the battery 15. In one embodiment, the third preset current is 128mA.

At block S412, if the battery 15 is too cold or too hot, the processor 12 controls the first charge management chip 141 and the second charge management chip 142 to suspend operating for a preset time (for example, 2 minutes), and then controls the first charge management chip 141 and the second charge management chip 142 to resume operating and output currents to charge the battery 15.

At block S413, if the electronic device 100 determines that the current I1 output from the first charge management chip 141 is greater than or equal to the third preset current, the processor 12 further acquires the current I2 output from the second charge management chip 142 and calculates the sum current Ic of the current I1 output from the first charge management chip 141 and the current I2 output from the second charge management chip 142.

At block S414, the processor 12 determines whether the sum current Ic is greater than the fourth preset current. If yes, return to S401, otherwise, proceed to S414.

In some embodiments, the charging method further includes the following processes.

After the controller 23 of the charge 200 is connected to the power supply 2, the controller 23 of the charge 200 controls the charge current Iq output from the charger 200 to be limited to the first threshold value.

In some embodiments, the charging method further includes the following processes.

After the electronic device 100 is powered on, the processor 12 of the electronic device 100 sets the maximum charge current of the first charge management chip 141 and the second charge management chip 142 to be the second threshold value, set the cut-off current of the first charge management chip 141 to be the third threshold value, and set the cut-off current of the second charge management chip 142 to be the fourth threshold value.

In some embodiments, the first threshold value is greater than the second threshold value, the second threshold value is greater than the fourth threshold value, and the fourth threshold value is greater than the third threshold value.

Therefore, through the charger, the electronic device, the charging system, and the charging method of the present disclosure, after the handshake communication between the charger and the electronic device is successfully performed, the data pins of the power interface are control to be respectively connected the power pin and the ground pin such that the two data lines of the charge cable connected between the charger and the electronic device are respectively connected to the power line and the ground line of the charge cable. Thereby, the charge cable is thickened and the charging speed is enhanced under the condition of the same charge voltage or current. Furthermore, by detecting the current output from the charge management module 14, the electronic device 100 determines whether the battery 15 is full charged or whether the battery 15 is too cold or too hot to control the charge cable 300 to maintain the quick charging state or exit from the quick charging state, or to control the charge management module 14 to stop charging the battery 15. Thus, the charging processing of the battery 15 is efficiently managed.

The embodiments of the present disclosure are described in detail above. It should be noted that those skilled in the art may make some modifications and improvements without departing from the principle of the present disclosure. Those modifications and improvements are also considered to be within the scope of the present disclosure.

## Claims

1. An electronic device, comprising:
a power interface connected to a charger through a charge cable, the power interface comprising a power pin, a first data pin, a second data pin, and a ground pin;
a processor; and
a connection switching circuit connected to the power pin, the first data pin, the second data pin , and the ground pin of the power interface and the processor;
wherein the processor is operated to perform a handshake communication with the charger through the charge cable after the power interface of the electronic device is connected to a power interface of the charger through the charge cable; and the processor is further operated to control the connection switching circuit to connect the first data pin of the power interface to the power pin and connect the a second data pin of the power interface to the ground pin after the handshake communication is successfully performed.

2. The electronic device according to claim 1, wherein the processor is operated to trigger a third data pin of the charge interface of the charger to be connected to a power pin of the charge interface and a fourth data pin of the charge interface to be connected to a ground pin of the charge interface after the handshake communication is successfully performed.

3. The electronic device according to claim 2, wherein the electronic device further comprises a charge management module and a battery, the charge management module is electrically connected to the power interface for receiving a power provided by the charger from the power interface and converting the power into a suitable charge voltage or charge current to charge the battery, the charge management module comprises a first charge management chip and a second charge management chip, the first charge management chip and the second charge management chip both are electrically connected to the power pin of the power interface and the ground pin of the power interface, currents received by the power pin and the ground pin of the power interface are shunted to be transmitted to the first charge management chip and the second charge management chip, the first charge management chip and the second charge management chip are simultaneously connected to the battery, currents output from the first charge management chip and the second charge management chip are combined to form a sum current as a charge current for finally charging the battery.

4. The electronic device according to any one of claim 1 to claim 3, wherein the connection switching circuit comprises a first switch, a second switch, and an enable terminal, a common terminal of the first switch is electronically connected to the first data pin of the power interface, a common terminal of the second switch is electronically connected to the a second data pin of the power interface, a normally closed terminal of the first switch is electronically connected to the processor, a normally open terminal of the first switch is electronically connected to the power pin of the power interface, a normally closed terminal of the second switch is electronically connected to the processor, a normally open terminal of the second switch is electronically connected to the ground pin of the power interface, the enable terminal is connected between the power pin of the power interface and a ground switch; in an original state, the common terminal of the first switch is connected to the normally closed terminal of the first switch and the common terminal of the second switch is connected to the normally closed terminal of the second switch ; after the handshake communication is successfully performed, the processor controls to output a turn-on signal to the ground switch to control the ground switch to be turned on, when a branch where the enable terminal is located has a current passing therethrough, which triggers the common terminal of the first switch to be connected to the normally open terminal of the first switch and triggers the common terminal of the second switch to be connected to the normally open terminal of the second switch , to connect the first data pin of the power interface to the power pin of the power interface and connect the a second data pin of the power interface to the ground pin of the power interface.

5. The electronic device according to any one of claim 1 to claim 3, wherein the processor performing the handshake communication with the charger through the charge cable comprises: the processor sending a first preset pulse signal to the charger through the charge cable, the charger sending a second preset pulse signal to the processor through the charge cable after receiving the first preset pulse signal, and the processor confirming the handshake communication is successfully performed after receiving the second preset pulse signal.

6. The electronic device according to claim 3, wherein the processor is further operated to acquire a state of the battery after the connection switching circuit is controlled to respectively connect the first data pin of the power interface to the power pin and connect the a second data pin of the power interface to the ground pin, the state comprises a temperature state of the battery, the processor determines whether the battery is too cold or too hot according to the state of the battery, when the battery is not too cold or not too hot, the processor acquires a current I1 and a current I2 respectively output from the first charge management chip and the second charge management chip, calculates a sum current Ic of the current I1 respectively output from the first charge management chip and the current I2 output from the second charge management chip, and determines whether the sum current Ic is less than a second preset current, when the sum current Ic is less than the second preset current, and the processor controls the first charge management chip and the second charge management chip to stop charging the battery.

7. The electronic device according to claim 6, wherein the processor is further operated to control the connection switching circuit to disconnect the first data pin of the power interface from the power pin and disconnect the a second data pin of the power interface from the ground pin when the battery is not too cold or not too hot.

8. A charger , comprising:
a charge interface comprising a power pin, a first data pin, a second data pin, and a ground pin;
a controller; and
a connection switching circuit connected to the first data pin, the second data pin, and the ground pin of the charge interface and the controller;
wherein the controller is operated to control the connection switching circuit to connect the first data pin of the charge interface to the power pin and connect the a second data pinof the charge interface to the ground pin after a handshake communication between the charger and an electronic device is successfully performed.

9. The charger according to claim 8, wherein the connection switching circuit comprises a first switch, a second switch, and an enable terminal, a common terminal of the first switch is electronically connected to the first data pin of the charge interface, a normally closed terminal of the first switch is electronically connected to the controller, a normally open terminal of the first switch is electronically connected to the power pin of the charger , a common terminal of the second switch is electronically connected to the a second data pin of the charge interface, a normally closed terminal of the second switch is electronically connected to the controller, a normally open terminal of the second switch is electronically connected to the ground pin of the charge interface, the enable terminal is connected between the power pin of the charge interface and a ground switch ; in an original state, the common terminal of the first switch is connected to the normally closed terminal of the first switch and the common terminal of the second switch is connected to the normally closed terminal of the second switch ; after the handshake communication is successfully performed, the controller controls to outputs a turn-on signal to the ground switch to control the ground switch to be turned on, when a branch where the enable terminal is located has a current passing therethrough, which triggers the common terminal of the first switch to be connected to the normally open terminal of the first switch , and triggers the common terminal of the second switch to be connected to the normally open terminal of the second switch , to connect the first data pin of the charge interface to the power pin of the charger interface and connect the a second data pin of the charge interface to the ground pin of the charge interface.

10. The charger according to claim 8 or claim 9, wherein the charger further comprises a first resistor located in a branch of the ground pin of the charge interface and a current detection and control circuit connected to two ends of the resistor, the current detection and control circuit is operated to detect a charge current output from the charger to a power interface , the controller of the charger is connected to the current detection and control circuit to receive the charge current detected by the current detection and control circuit, the controller determines whether the charge current is greater than a first preset current after the handshake communication is successfully performed, when the charge current is greater than the first preset current, the controller controls the connection switching circuit to connect the first data pin of the charge interface to the power pin and connect the a second data pin of the charge interface to the ground pin.

11. The charger according to claim 10, wherein the controller is further operated to periodically determine whether the charge current is greater than the first preset current, when the charge current is less than or equal to the first preset current, the controller controls the connection switching circuit to disconnect the first data pin of the charge interface from the power pin, and disconnect the a second data pin of the charge interface from the ground pin.

12. A charging system, comprising:
an electronic device, comprising:
a processor;
a power interface, the power interface comprising a first power pin, a first data pin, a second data pin, and a first ground pin; and
a first connection switching circuit connected to the processor, the first power pin, the first data pin, the second data pin, and the first ground pin of the power interface;
a charger, comprising:
a controller;
a charge interface, the charge interface comprising a second power pin, a third data pin, a fourth data pin, and a second ground pin; and
a second connection switching circuit connected to the controller, the second power pin, the third data pin, the fourth data pin, and the second ground pin of the charge interface;
wherein the processor is operated to perform a handshake communication with the charger through a charge cable after the power interface of the electronic device is connected to the charge interface of the charger through the charge cable, the processor is further operated to control the first connection switching circuit to connect the first data pin to the first power pin of the power interface and connect the second data pin to the first ground pin of the power interface after the handshake communication is successfully performed, the controller is operated to control the second connection switching circuit to connect the third data pin to the second power pin of the charge interface and connect the fourth data pin to the second ground pin of the charge interface after the handshake communication is successfully performed.

13. The charger system according to claim 12, wherein the electronic device further comprises a charge management module and a battery, the charge management module is electronically connected to the power interface for receiving a power provided by the charger and converting the power into a suitable charge voltage or charge current to charge the battery, the charge management module comprises a first charge management chip and a second charge management chip, the first charge management chip and the second charge management chip both are electrically connected to the power pin and the ground pin of the power interface, currents received by the power pin and the ground pin of the power interface are shunted to be transmitted to the first charge management chip and the second charge management chip, the first charge management chip and the second charge management chip are simultaneously connected to the battery, currents respectively output from the first charge management chip and the second charge management chip are combined to form a sum current as a charge current for finally charging the battery.

14. The charger system according to claim 12 or claim 13, wherein the first connection switching circuit comprises a first switch, a second switch, and a first enable terminal, a common terminal of the first switch is electronically connected to the first data pin of the power interface, a normally closed terminal of the first switch is electronically connected to the processor, a normally open terminal of the first switch is electronically connected to the first power pin of the power interface; a common terminal of the second switch is electronically connected to the second data pin of the power interface, a normally closed terminal of the second switch is electronically connected to the processor, a normally open terminal of the second switch is electronically connected to the first ground pin of the power interface, the first enable terminal is connected between the first power pin of the power interface and a first ground switch; in an original state, the common terminal of the first switch is connected to the normally closed terminal of the first switch and the common terminal of the second switch is connected to the normally closed terminal of the second switch; after the handshake communication is successfully performed, the processor controls to output a turn-on signal to the first ground switch to control the first ground switch to be turned on, when a branch where the enable terminal is located has a current passing therethrough, which triggers the common terminal of the first switch to be connected to the normally open terminal of the first switch and triggers the common terminal of the second switch to be connected to the normally open terminal of the second switch, to connect the first data pin of the power interface to the first power pin and connect the second data pin of the power interface to the first ground pin.

15. The charger system according to claim 12 or claim 13, wherein the second connection switching circuit comprises a third switch, a fourth switch, and a second enable terminal, a common terminal of the third switch is electronically connected to the third data pin of the charge interface, a normally closed terminal of the third switch is electronically connected to the controller, a normally open terminal of the third switch is electronically connected to the second power pin of the charger; a common terminal of the fourth switch is electronically connected to the fourth data pin of the charge interface, a normally closed terminal of the fourth switch is electronically connected to the controller, a normally open terminal of the fourth switch is electronically connected to the second ground pin of the charge interface, the second enable terminal is connected between the power pin of the charge interface and a second ground switch; in an original state, the common terminal of the third switch is connected to the normally closed terminal of the third switch and the common terminal of the fourth switch is connected to the normally closed terminal of the fourth switch; after the handshake communication is successfully performed, the controller controls to output a turn-on signal to the second ground switch to control the second ground switch to be turned on, when a branch where the second enable terminal is located has a current passing therethrough, which triggers the common terminal of the third switch to be connected to the normally open terminal of the third switch and triggers the common terminal of the fourth switch to be connected to the normally open terminal of the fourth switch, to connect the third data pin of the charge interface to the second power pin and connect the fourth data pin of the charge interface to the second ground pin.

16. A charging method operated to control a charger to charge an electronic device, the charger comprising a charge interface, the electronic device comprising a power interface, the power interface comprising a first power pin, a first data pin, a second data pin, and a first ground pin, the charge interface comprising a second power pin, a third data pin, a fourth data pin, and a second ground pin, the charging method further comprising:
performing a handshake communication with the charger through a charge cable when the electronic device is connected to the charger through the charge cable; and
controlling the first data pin to be connected to the first power pin of the power interface, and controlling the a second data pinto be connected to the first ground pin of the power interface; and controlling the third data pin to be connected to the second power pin of the charge interface, and controlling the fourth data pin to be connected to the second ground pin of the charge interface, after the handshake communication is successfully performed.

17. The charging method according to claim 16, wherein the electronic device comprises a processor and a first connection switching circuit, the first connection switching circuit is connected to the first power pin, the first data pin, the second data pin, and the first ground pin of the power interface, and the processor, the charging method further comprising:
the controlling the first data pin to be connected to the first power pin of the power interface and controlling the a second data pinto be connected to the first ground pin of the power interface, comprising:
controlling the first connection switching circuit to connect the first data pin to the first power pin of the power interface and connect the a second data pinto the first ground pin of the power interface after the handshake communication is successfully performed.

18. The charging method according to claim 16, wherein the charger further comprises a controller and a second connection switching circuit, the second connection switching circuit is connected to the second power pin, the third data pin, the fourth data pin, and the second ground pin of the power interface and the controller, the charging method further comprising:
the controlling the third data pin to be connected to the second power pin of the charge interface, and controlling the fourth data pin to be connected to the second ground pin of the charge interface, comprising:
controlling the second connection switching circuit to connect the third data pin to the second power pin of the charge interface and connect the fourth data pin to the second ground pin of the charge interface after the handshake communication is successfully performed.

19. The charging method according to claim 16, wherein performing a handshake communication with the charger through a charge cable when the electronic device is connected to the charger through the charge cable, comprises:
sending a first preset pulse signal to the charger by the electronic device; and
sending a second preset pulse signal to the electronic device by the charger after the charger receives the first preset pulse signal, wherein the electronic device confirms that the handshake communication is successfully performed after receiving the second preset pulse signal, or the charger confirms that the handshake communication is successfully performed after receiving the first preset pulse signal.

20. The charging method according to claim 16, wherein the electronic device further comprises a battery, the charging method further comprises:
acquiring a state of the battery, the state comprising a temperature state;
determining whether the battery is too cold or too hot according to the state; and
controlling the first data pin of the power interface of the electronic device to disconnect from the first power pin and controlling the second data pin to disconnect from the first ground pin when the battery is not too cold or not too hot.

21. The charging method according to claim 20, wherein the electronic device further comprises a first charge management chip and a second charge management chip, the charging method further comprises:
acquiring currents respectively output from the first charge management chip and the second charge management chip according to the state of the battery, and calculating a sum current of the currents respectively output from the first charge management chip and the second charge management chip when the battery is not too cold or not too hot;
determining whether the sum current is less than a second preset current; and
controlling the first charge management chip and the second charge management chip to stop charging the battery when the sum current is less than the second preset current.

22. The charging method according to claim 20, wherein when the first data pin of the power interface of the electronic device is disconnected from the first power pin and the second data pin is disconnected from the first ground pin, the charging method further comprises:
reading a current output from the first charge management chip and determining whether the current output from the first charge management chip is less than a third preset current;
determining whether the battery is too cold or too hot when the current output from the first charge management chip is less than the third preset current; and
controlling the first charge management chip and the second charge management chip to stop charging the battery when the battery is too cold or too hot.

23. The charging method according to claim 22, wherein when the output current from the first charge management chip is less than the third preset current, the charging method further comprises:
controlling the first charge management chip and the second charge management chip to temporarily stop charging the battery for a preset time when the battery is too cold or too hot, and then controlling the first charge management chip and the second charge management chip to resume to output currents to charge the battery.

24. The charging method according to claim 22, further comprising:
acquiring a current output from the second charge management chip when the current output from the first charge management chip is greater than or equal to the third preset current, and calculating a sum current of the current output from the first charge management chip and the current output from the second charge management chip;
determining whether the sum current is less than a fourth preset current; and
controlling the electronic device to perform the handshake communication with the charger when the sum current is greater than the fourth preset current; and controlling the first power pin of the power interface to be electronically connected to the first data pin, controlling the first ground pin of the power interface to be electronically connected to the second data pin, controlling the second power pin of the charge interface to be electronically connected to the third data pin, and controlling the second ground pin of the charge interface to be electronically connected to the fourth data pin after the handshake communication is successfully performed.

25. The charging method according to claim 21, further comprising:
controlling a charge current output from the charger to be limited at a first threshold value after the charger is connected to a power supply; and
setting the maximum charge current of the first charge management chip and the second charge management chip as a second threshold value; setting a cut-off charge current of the first charge management chip as a third threshold value; and setting a cut-off charge current of the second charge management chip as a fourth threshold value after the electronic device is started.

26. The charging method according to claim 25, wherein the first threshold value is greater than the second threshold value, the second threshold value is greater than the fourth threshold value, and the fourth threshold value is greater than the third threshold value.
